# EUROPEAN PATENT APPLICATION

(11) **EP 2 072 595 A1**
(43) Date of publication of application: **24.06.2009**
(21) Application number: 08022072.6
(22) Date of filing: 18.12.2008
(51) Int. Cl.: C09J 7/02, B05C 5/02

(54) **Striped adhesive construction and method and coating die for making same**

(30) Priority: 19.12.2007 US 960575
(71) Applicant: Avery Dennison Corporation, Pasadena, CA 91103-3596 (US)
(72) Inventor: Ko, Chan, Arcadia, CA 91006 (US); Wilson, Doug, San Dimas, CA 91773 (US); Akeley, Jim, Mill Hall, PA 17751 (US); Mallya, Prakash, Sierra Madre, CA 61024 (US); Tse, James T., Alhambra, CA 91801 (US); Sasaki, Yukihiko, Claremont, CA 91711 (US)
(74) Representative: Müller-Boré & Partner Patentanwälte

(57) **Abstract**

Structured adhesive constructions are provided. The adhesive constructions comprise a layer of a first adhesive with a first property and a layer of a second adhesive with a second property. The layer of the first adhesive comprises a plurality of spaced apart stripes of adhesive, coated on or laminated to a facestock or release liner. The layer of the second adhesive comprises a plurality of spaced apart stripes of adhesive, coated on or laminated to the facestock or release liner and located between the plurality of stripes of the first adhesive. The use of two different adhesives enables manipulation of desired adhesive properties in a single adhesive construction. The resulting adhesive may have two or more different desired properties, such as adherence at both high and low temperatures, or initial repositionability followed by permanent adhesion, or other combinations of desired properties. A coating die and a method of coating structured adhesive constructions are also provided.

## Description

### FIELD OF THE INVENTION

The present invention is directed to striped pressure-sensitive adhesive constructions that combine two or more adhesives having distinct properties and characteristics.

### BACKGROUND

Pressure-sensitive adhesive (PSA) labels and tapes are well known. In a typical label construction, one or more layers of adhesive are coated on or otherwise applied to a release liner and then laminated to a backing, such as paper, polymeric film, or other flexible material, which may be ink-receptive. In a typical tape construction, one surface of a polymeric film or woven paper is coated with an adhesive, and the construction is then wound upon itself. A release liner is not generally required if an opposite surface has release properties. Labels are usually die-cut and matrix-stripped before use. In contrast, tapes usually do not require die-cutting and matrix-stripping, and generally need not be ink-receptive.

PSAs can be coated onto a facestock or release liner by roll coating, die coating, and curtain coating. In die coating, a web, such as the release liner, is passed by a coating device that coats the web with a thin layer of the PSA. The PSA flows out through a thin slot in the coating device onto the moving web. The web may be passed by the coating device multiple times to generate a PSA with multiple layers of adhesive, one on top of another. In a dual-die coater, the web can be simultaneously coated with two layers in a single pass. The dual die coater includes two slots for applying adhesive to the web. A first adhesive flows onto the web through the first slot, and a second adhesive flows out on top of the first adhesive through the second slot. Dual die coating is described in more detail in Avery Dennison Corporation's U.S. Patent Nos. 5,728,430, and 5,962,075, and PCT application Publication No. WO 1996/08319, the entire contents of which are incorporated by reference herein.

PSAs are often formulated to fit specific performance requirements, including sufficient shear, peel adhesion, and tack or quickstick, at various temperatures and on a variety of substrates. PSAs can exhibit a range of properties and are used in a broad spectrum of applications.

For example, graphic films utilizing pressure sensitive adhesive are common in the graphics arts industry. Application of graphics film during the summer months can be difficult if the adhesive exhibits too much tack, so adhesives with less tack are desirable. However, during winter months, an adhesive that was designed for good tack at high temperatures may have little or no tack at low temperatures. Thus, installation of graphic films in the winter may require heated garages, which can be expensive. In addition, some industrial applications, including automotive assembly, involve application of adhesive at ambient conditions much below or much above room temperature. Thus, there is still a need for an adhesive that performs well at both high and low temperatures.

PSAs can also be formulated to adhere well to substrates with high or low surface energy. Silicone-based adhesives adhere well to low surface energy substrates, such as polyolefins, while acrylic-based adhesives adhere well to high surface energy substrates, such as steel. However, silicone PSAs tend to be more expensive than acrylic PSAs. Styrene-butadiene rubber latex adhesive is less costly than acrylic emulsion adhesive, but may not be as durable. Another alternative is adding low-cost filler materials such as calcium carbonate to an adhesive to effectively dilute the adhesive and lower the cost. However, the filler also detrimentally affects the adhesive properties of the filled adhesive. Thus, there is still a need for a low-cost adhesive that adheres well to substrates having different surface energies.

Another desirable PSA property is repositionability. Depending on the facestock to which they are laminated and the substrate to which they are applied, PSAs can be classified as more or less "permanent" or "removable." When a permanent PSA tape or label is adhered to a substrate, the adhesive bond to the substrate grows over time (often quickly), and the backing material cannot be removed without damaging the backing and/or the substrate, or without leaving an adhesive residue on the substrate. In contrast, removable PSAs can be removed from a substrate by application of a relatively small peel force, even after an extended period of time, because adhesion to the substrate remains constant, or grows only slightly over time.

A permanent adhesive is often desirable for creating a strong, permanent bond to the substrate. However, a removable adhesive is desirable where exact placement of a label on a substrate is needed. If a label is positioned incorrectly, the use of a removable adhesive allows the label to be removed and repositioned. For applications such as address labels, the strong bond imparted by the permanent adhesive is desirable for secure affixation of the label to an envelope. However, removal and repositioning of the label are also desirable in such applications.

For address labels and many other applications, multiple PSA properties are desirable in one adhesive construction. Therefore, a need exists for a PSA construction that can exhibit multiple characteristics or properties, such as a PSA that exhibits repositionability but develops a strong bond over time, or a PSA that adheres well at both high and low temperatures. There is also a need for a method of manufacturing such a PSA construction.

### SUMMARY

The present invention relates to structured PSA constructions that exhibit two or more different adhesive properties. A method and a die, or die sub-assembly, for making such constructions are also provided. The PSA construction utilizes two or more different adhesives in alternating stripes. The use of two different adhesives enables manipulation of desired adhesive properties in a single adhesive construction. In one aspect of the invention, the resulting adhesive construction has two or more desired properties, such as adherence at both high and low temperatures, initial repositionability followed by permanent adhesion, adherence to both high and low surface energy substrates, or other combinations of desired properties. In another aspect of the invention, the structured adhesive construction has properties that are anisotropic, such as the ability to cleanly peel the adhesive from a substrate in one direction but not the other. In one aspect of the invention, a method of preparing a striped adhesive construction includes the simultaneous coating of two or more adhesives in a single step.

In one embodiment of the invention, a PSA construction is repositionable for an initial period of time (e.g., about 2 minutes), yet forms a permanent bond within about 20 minutes. The structured PSA construction comprises a layer of removable adhesive and a layer of permanent adhesive coated on or laminated to a facestock. The layer of removable adhesive comprises a plurality of spaced apart stripes of the removable adhesive coated on the facestock. The layer of permanent adhesive comprises a plurality of spaced apart stripes of the permanent adhesive, where the stripes of permanent adhesive are coated between or otherwise located adjacent to, or substantially near to, the stripes of removable adhesive. Preferably, the stripes of removable adhesive are wider than the stripes of permanent adhesive; thus, more of the removable adhesive is present. Preferably, the stripes of the first (permanent) and second (removable) adhesives are continuous along a length of the adhesive construction.

In another embodiment, a PSA construction adheres well to at least one substrate at both high and low temperatures. This PSA construction comprises a combination of a low-temperature adhesive and a high-temperature adhesive coated on or laminated to a facestock and/or a release liner. The low-temperature adhesive comprises a plurality of spaced apart stripes of the low temperature adhesive located on the facestock. The high-temperature adhesive comprises a plurality of spaced apart stripes of the high-temperature adhesive, where the stripes of high-temperature adhesive are located between the stripes of low-temperature adhesive. The resulting striped PSA construction provides good adhesion at both low temperature and high temperature.

In another embodiment, a pressure-sensitive adhesive construction comprises a facestock; a release liner; and an adhesive layer coated between the release liner and the facestock, the adhesive layer comprising a plurality of die coated, alternating stripes of first and second adhesives. The first adhesive is a permanent adhesive, and the second adhesive is a removable adhesive. The adhesive layer is initially repositionable after being applied to a substrate such as paper, film, polyolefin, steel, or glass substrate, and is adapted to form a permanent bond to the substrate within about 20 minutes. The listed substrates are merely examples for illustration, and are not meant to be limiting. The PSA construction may be adhered to many other types of substrates.

In another embodiment, a pressure-sensitive adhesive construction includes a facestock; a release liner; and an adhesive layer coated between the release liner and the facestock, the adhesive layer comprising a plurality of die coated, alternating stripes of first and second adhesives. The first adhesive is a high-temperature adhesive, and the second adhesive is a low-temperature adhesive. The resulting striped PSA construction provides good adhesion at both high temperature and low temperature.

In another embodiment, a pressure-sensitive adhesive construction includes a facestock; a release liner; and an adhesive layer coated between the release liner and the facestock, the adhesive layer comprising a plurality of die coated, alternating stripes of first and second adhesives. The first adhesive is a high surface energy adhesive, and the second adhesive is a low surface energy adhesive. The resulting striped PSA construction provides good adhesion to both high surface energy substrates and low surface energy substrates.

In another embodiment, a method of preparing a pressure-sensitive adhesive construction includes providing a coating die having a first slot and a second slot and a plurality of shims positioned in at least one of the first slot and the second slot; moving a web past the coating die, wherein the web comprises one of a facestock and a release liner; die coating an adhesive layer onto the web in a single pass, the adhesive layer comprising a plurality of alternating stripes of a first adhesive and a second adhesive, wherein the first adhesive is die coated through the first slot and the second adhesive is die coated through the second slot; and laminating the other of the facestock and the release liner to the adhesive layer opposite the web.

In the course of the present invention, there is provided a die coater, or die coater sub-assembly, for preparing a pressure-sensitive adhesive construction includes a center die having first and second die surfaces; first die cover facing the first die surface and forming a first slot between the first die cover and the first die surface; a second die cover facing the second die surface and forming a second slot between the second die cover and the second die surface; and a plurality of first shims positioned in the first slot. Preferably, each of the plurality of first shims is adhered to the first die surface. In a further embodiment, the die coater sub-assembly further comprises a plurality of second shims positioned in the second slot, wherein the plurality of first shims and the plurality of second shims form an alternating pattern. In still another embodiment the plurality of first shims overlap the plurality of second shims.

### BRIEF DESCRIPTION OF THE DRAWINGS

These and other features and advantages of the present invention will be better understood by reference to the following detailed description when considered in conjunction with the accompanying drawings, wherein:

FIG. 1 is a schematic front view of the mouth of a dual layer die according to an embodiment of the invention;

FIG. 2 is a schematic front view of the mouth of dual layer die according to an embodiment of the invention;

FIG. 3 is a photoreproduction front view of a center die for use in a dual layer die according to an embodiment of the invention;

FIG. 4 is a photoreproduction perspective view of the center die of FIG. 3;

FIG. 5 is a cross-sectional side view of a dual layer die according to an embodiment of the invention;

FIG. 6a is a perspective view of an adhesive construction according to an embodiment of the invention;

FIG. 6b is a perspective view of an adhesive construction according to an embodiment of the invention;

FIG. 7 is a perspective view of an adhesive construction according to an embodiment of the invention;

FIG. 8 is a schematic front view of a single layer die according to an embodiment of the invention;

FIG. 9 is a perspective view of an adhesive construction according to an embodiment of the invention;

FIG. 10 is a schematic front view of a triple layer die according to an embodiment of the invention;

FIG. 11 is a perspective view of an adhesive construction according to an embodiment of the invention;

FIG. 12a is a perspective view of an adhesive construction according to an embodiment of the invention;

FIG. 12b is a perspective view of an adhesive construction according to an embodiment of the invention; and

FIG. 12c is a perspective view of an adhesive construction according to an embodiment of the invention.

To aid the reader, the thickness and/or other dimensions of the die(s), die cover(s) shims, and adhesives are grossly exaggerated in some of the figures, and the relative dimensions are not necessarily drawn to scale.

### DETAILED DESCRIPTION

The detailed description set forth below in connection with the drawings is intended as a description of the presently preferred embodiments of a striped adhesive construction, a method, and a die coater sub-assembly provided in accordance with the present invention, and is not intended to represent the only forms in which the present invention may be constructed or utilized. It is to be understood that the same or equivalent functions and structures may be accomplished by different embodiments that are also intended to be encompassed within the spirit and scope of the invention. As denoted elsewhere herein, like element numbers indicate like elements or features.

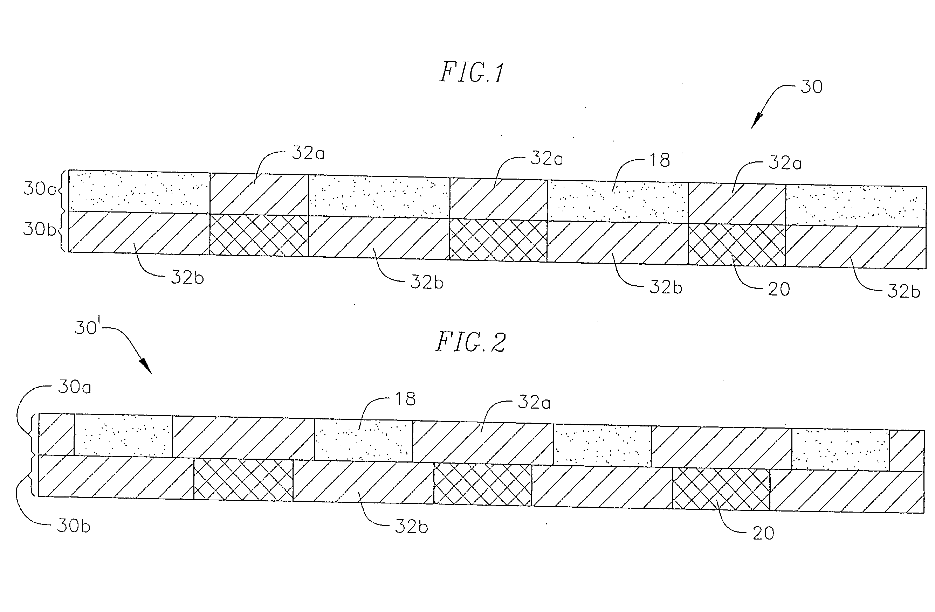

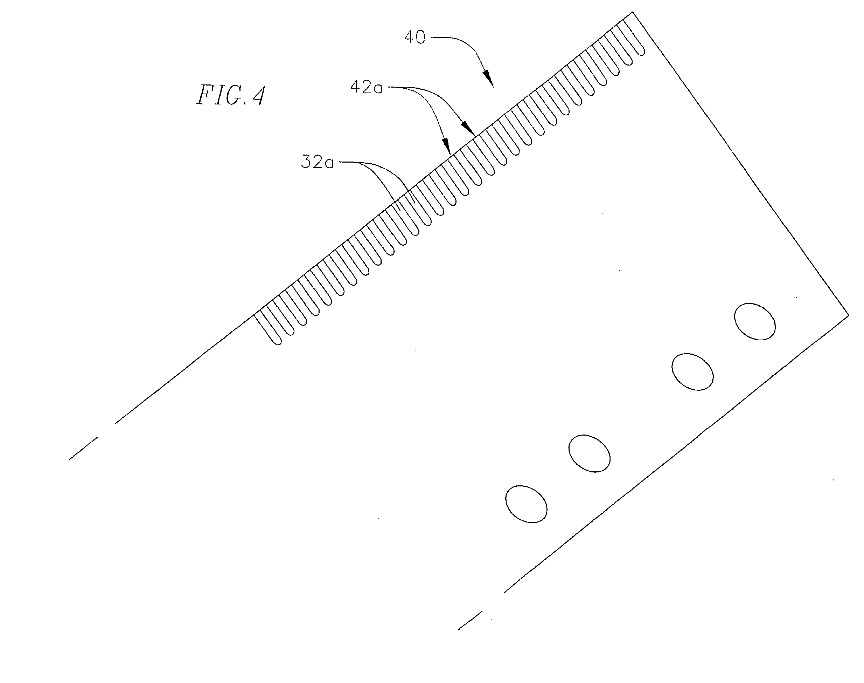

FIGS. 1-5 illustrate various embodiments and views of a dual-layer die (sometimes referred to as a die coater sub-assembly) for making a striped pressure-sensitive adhesive (PSA) construction according to one aspect of the invention, the construction having two or more different adhesives in alternating, optionally continuous, stripes. The use of two different adhesives enables manipulation of desired adhesive properties in a single adhesive construction. Consequently, the resulting adhesive construction can have two or more different desired properties, such as adherence to a substrate at both high and low temperatures, initial repositionability followed by permanent adhesion, adherence to both high and low surface energy substrates, or other combinations of desired properties. Alternatively, the construction can display an anisotropic property or properties. Additionally, the resulting adhesive construction can have desirable adhesive properties at a reduced cost. In comparison with adhesives that would be required in fullface adhesive constructions, the striped adhesive construction permits use of an adhesive that is significantly less expensive as one of multiple adhesives in the construction. The method of preparing the striped adhesive construction of the present invention includes the simultaneous coating of two or more different adhesives in a single step.

In one embodiment schematically illustrated in FIG. 1, a dual-layer die 30 is used to die coat a striped PSA onto a moving web. The dual-layer die 30 includes a first region 30a and second region 30b. A first adhesive 18 is die coated through the first region 30a, and a second adhesive 20 is die coated through the second region 30b. Shims 32a are positioned within the first region 30a to block the flow of the first adhesive 18, and shims 32b are positioned in the second region 30b to block the flow of the second adhesive 20. When the shims 32a, 32b are positioned in the alternating pattern shown in FIG. 1, the flow of the first adhesive 18 is blocked where the second adhesive 20 flows, and vice versa. The resulting PSA has a striped construction, with stripes of the first adhesive 18 between stripes of the second adhesive 20.

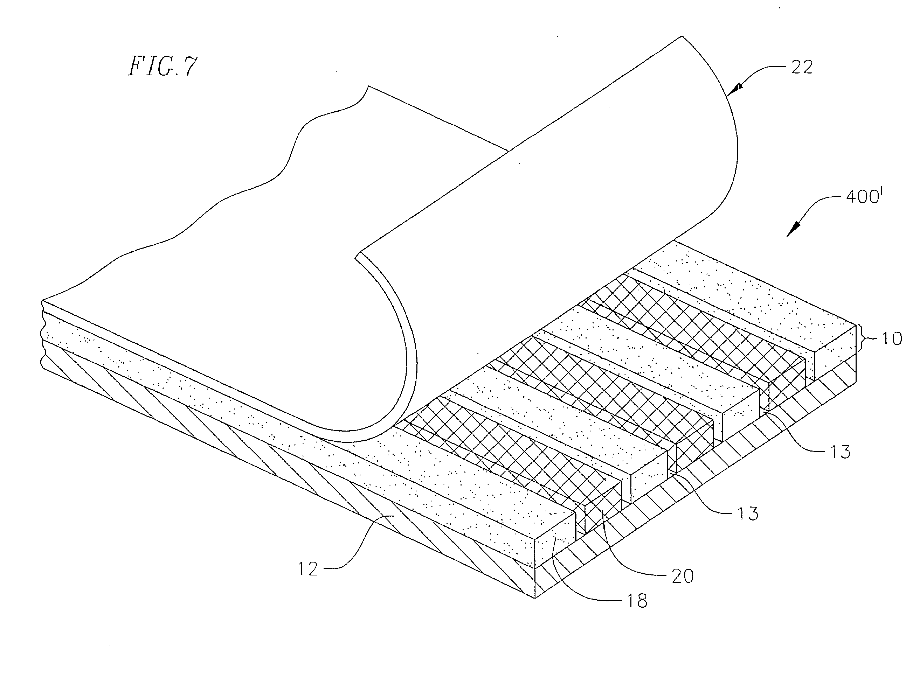

The shims 32a, 32b can be varied in width to introduce a desired separation between the stripes of the first adhesive 18 and the second adhesive 20. For example, in some PSA constructions, components of one or both of the adhesives 18 and 20 can migrate or flow after they are die coated onto the moving web. Migration of the two adhesives can result in a loss of uniqueness of the two layers. To counter this, it can be desirable to leave an air channel or gap between the alternating stripes of the two adhesives, to prevent mixing and migration of the two. In the embodiment shown in FIG. 2, a dual die 30' includes shims 32a, 32b that are positioned to overlap each other. The overlapping shims block the flow of both adhesives to leave a gap or channel 13 between the two adhesives 18 and 20 (see, e.g., FIG. 7). The size and width of the shims 32a, 32b can be varied to control the size of the gaps, the width of the stripes of adhesive, and the amount of migration or mixing of the adhesives 18 and 20 at their boundaries. Shims can also be used to create gaps between groups or sets of adhesive stripes. For example, the shims could be positioned to create two or three stripes of adhesive followed by a gap, then another two or three stripes of adhesive and another gap, and so on. In this way, sets of abutting stripes can be separated by air gaps or channels. The relative widths of the adhesive stripes and air gaps may all vary.

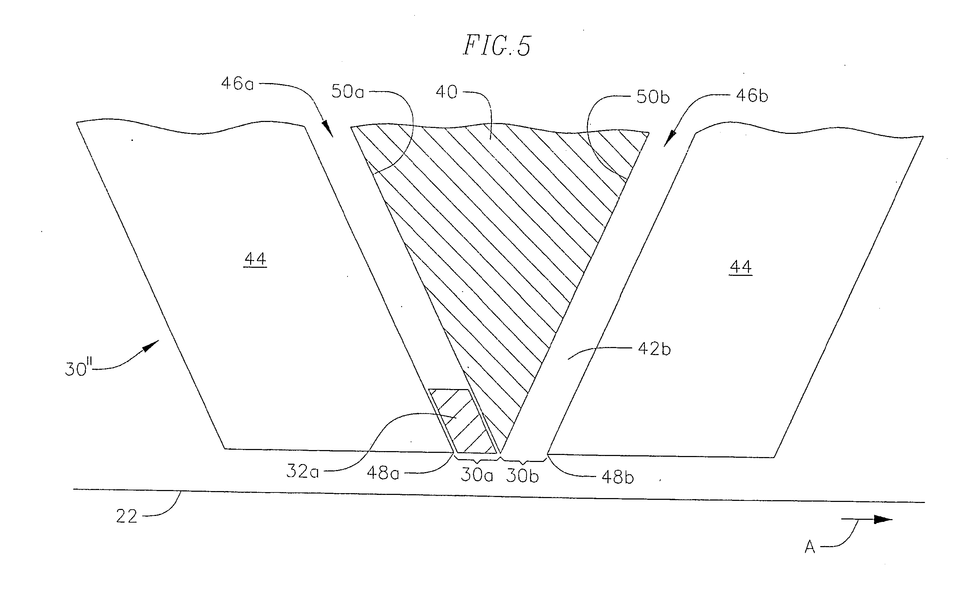

The use of the dual-layer die and shims 32a, 32b allows simultaneous coating of two or more adhesives in one step. The two adhesives 18 and 20 are die coated simultaneously through the die 30, 30' onto a moving web, such that the moving web receives both adhesives at the same time. In one embodiment, the moving web is a release liner 22 (see in FIG. 5). After the adhesive layers are coated onto the release liner, they are laminated to a facestock, such as a label sheet for adhesive labels. Alternatively, the moving web can be the facestock, and the adhesive layers are first coated on the facestock and then protected until use by a release liner. In either case, the resulting construction can be dried, slitted, cut into sheets, die-cut, matrix-stripped, and/or converted by similar and other processes familiar to persons skilled in the art.

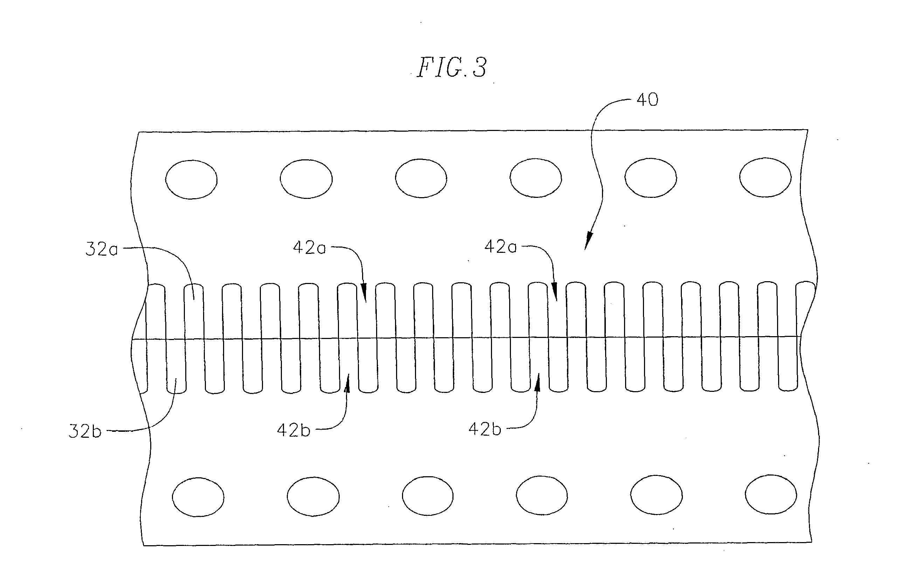

The dual layer is shown in greater detail in FIGS. 3-5, and includes a center die 40, shims 32a, 32b, two die covers 44, and adhesive flow passages 42a, 42b between the center die and the die covers. In the embodiment shown, the shims 32a, 32b are plastic pieces attached with an adhesive capable of bonding plastic to metal, directly to opposite sides of the center die 40. The spaces between the shims form flow passages 42a, 42b through which the adhesives 18 and 20 flow onto the moving web. The die covers 44 are secured on either side of the center die 40, facing the die surfaces 50a, 50b of the center die 40, and form two separate slots 46a and 46b between the die covers and the center die. As the web 22 moves in the direction of the arrow A, the first adhesive 18 flows through the first slot 46a toward the shims 32a. When it reaches the alternating shims 32a, the adhesive 18 flows through the flow passages 42a between the shims, onto the moving release liner 22. The second adhesive 20 flows through the second slot 46b. In the cross-section shown in FIG. 5, the second slot 46b is not blocked by a shim 32b, so the adhesive 20 flows through the flow passage 42b between the shims 32b.

The dual die sub-assembly is used in a die coater (adhesive coating station) that includes two or more adhesive supplies, pump(s), supply lines, metering control devices (e.g., microprocessor controlled valves), and/or other components known to persons skilled in the art. In the embodiment shown in FIGS. 3-5, two separate slots 46a, 46b are provided between the center die and the die covers for delivery of two adhesives 18, 20. The two adhesives can flow through these separate slots without contacting each other inside the die 30. Each slot can be oriented at a selected angle to deliver the adhesives 18,20 past the die lips 48a, 48b onto the release liner 22. By controlling the angle of orientation of the slots, a wide variety of adhesives, having a wide range of viscosities, can be applied by the dual die onto the moving web.

The two separate slots 46a, 46b each have their own set of shims 32a, 32b which determine the width of the flow passages 42a, 42b and thereby determine the width of the adhesive stripes 18,20 on the release liner 22. The shims 32a can be changed or varied independently of the shims 32b, as they are in two separate slots. Thus, the width of the stripes of first adhesive 18 are not dependent on the width of the stripes of the second adhesive 20. The shims 32a, 32b can be strategically placed to create alternating, adjacent stripes, or to create gaps or channels 13 (see FIG. 7) between the stripes or sets of abutting stripes, or to create overlapping stripes or layers of adhesive.

In one embodiment of the invention, the dual die uses two pumps and two adhesive delivery systems (not shown), one for each slot 46a, 46b. Each pump delivers the adhesive through an inlet into one of the slots 46a, 46b. The adhesive then flows through the slot into the flow passages between the shims, and out onto the moving web. The dual die can be varied for many different uses simply by rearranging the shims to create the desired pattern. Because the shims, and not the adhesive inlets, determine the pattern of the adhesive stripes, the dual die can be easily reconfigured for many different applications by simply rearranging the shims. Other features and techniques of dual-die adhesive coating, and associated equipment, are described in Avery's '430 and '075 patents and WO 1996/08319 PCT application, cited above.

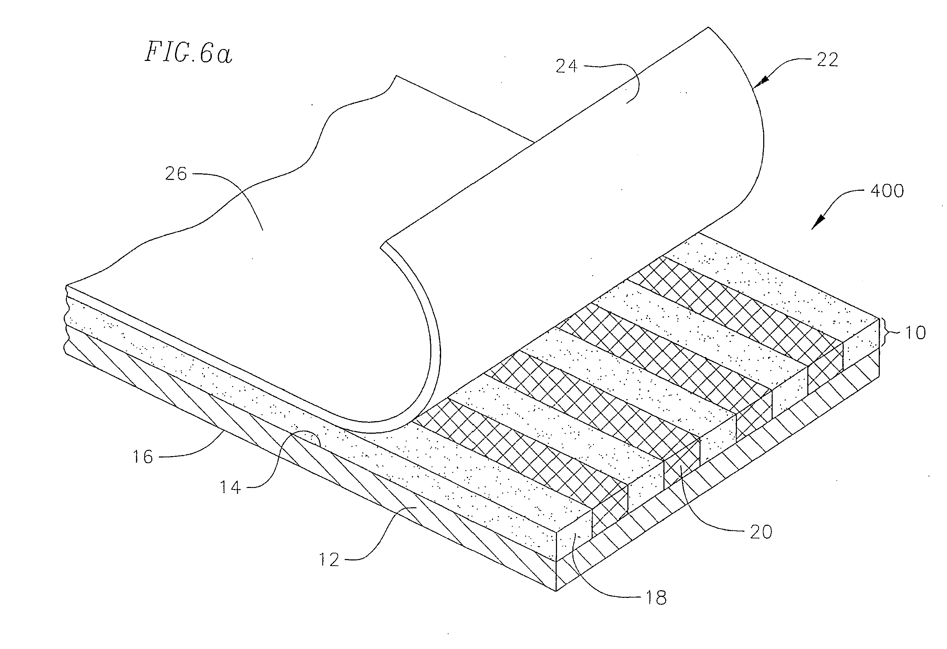

One embodiment of a striped adhesive construction 400 is shown in FIG. 6a. The first adhesive 18 and second adhesive 20 are formed in continuous, alternating stripes. Both stripes contact the release liner 22 and the facestock 12. When the release liner 22 is removed for application of the adhesives to a substrate, both adhesives 18 and 20 can be placed in simultaneous contact with the substrate.

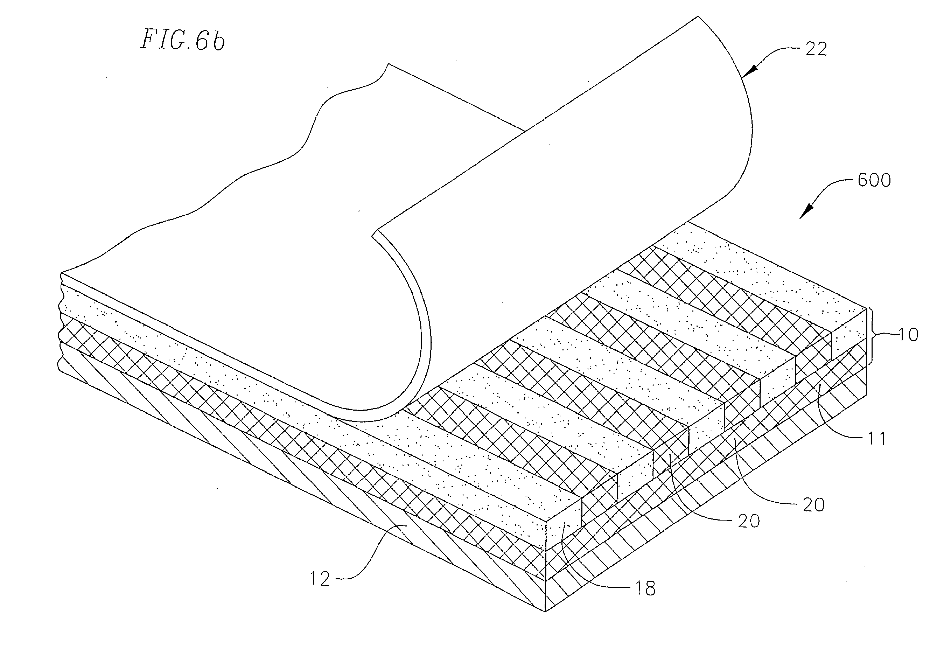

In the embodiment shown in FIGS. 6a, and 6b the stripes of the first adhesive 18 are approximately the same width as the stripes of second adhesive 20. In other embodiments, the stripes of one of the adhesives are wider than the stripes of the other adhesive. The adhesive coating or subassembly 10 (the layer comprised of the two adhesives and base coat) is coated onto the release liner 22, which has a release surface 24 and outer surface 26, and then is adhered to a facestock 12 with an inner surface 14 and outer surface 16. The bond between the adhesive coating 10 and the facestock 12 can be enhanced by corona-treating the facestock or including a tie or primer layer (not shown) between the adhesive layer and the facestock.

The facestock 12 can be any flexible material commonly used in tapes and labels. Nonlimiting examples include paper, such as kraft, bond, offset, litho paper, and sulfite paper, with or without a sizing or other surface treatment; films, such as vinyl, polyesters, polyolefins (e.g., polyethylene, polypropylene, polyethylene terephthalate, and ethylenepropylene copolymers); and other materials commonly used in the art. For laser label applications, particularly preferred paper facestocks are laser-imprintable paper facestocks having sufficient lay flat and toner anchorage, such as uncoated papers (e.g., bond, vellum, ledger, more preferably of about 40 to 60 lbs. per 25 inch x 38 inch x 500 ream size); coated papers (e.g. matte, semigloss, satin, fluorescent, and dull, more preferably of about 10 to 60 lbs. per 25 inch x 38 inch x 500 ream size); cast coated stocks (about 50 to 60 lbs.); and latex-impregnated coated and uncoated papers. Particularly preferred film facestocks for laser label applications are laser-imprintable film facestocks having sufficient heat stability and varnish receptive or toner anchorage. Examples of film facestocks include clear vinyls and polyesters about 2 to 4 mils thick, pigment-filled vinyls and polyesters for colors, about 2 to 6 mils thick, metallized polyesters on backside about 2 to 4 mils thick, and two-side polyethylenecoated kraft paper about 5 mils thick.

The adhesive coating 10 is protected by the release liner 22, for example, a conventional, silicone-coated kraft paper with a solventless silicone coating. Other suitable release liners are familiar to persons skilled in the art. The release liner 22 is removed when the adhesive coating 10 is applied to a substrate.

In another embodiment, shown in FIG. 6b, an adhesive construction 600 includes a base coat of second adhesive 20. This construction 600 could be made, for example, by removing all of the shims 32b from the slot 46b in FIG. 5. The shims 32a will create stripes of the first adhesive 18 on the release liner 22. The open slot 46b, without shims, will allow the second adhesive 20 to flow out between and on top of the stripes of first adhesive 18. The second adhesive 20 covering the stripes forms a base coat 11 that is adhered to the facestock 12.

In another embodiment, shown in FIG. 7, an adhesive construction 400' includes air channels or gaps 13 between the stripes of adhesive. These gaps are formed when the shims 32a, 32b overlap to block the flow of both adhesives onto the release liner. Gaps may be formed between sets of abutting adhesive stripes by overlapping only some of the shims.

The shims 32a and 32b create the desired striped construction of the adhesive coating 10. In the embodiments shown in FIGs. 1-5, the shims 32a and 32b are alternatively arranged in fashion such that stripes of the second adhesive 20 are coated between stripes of the first adhesive 18.

The width of shims 32a and 32b can be changed as desired independently of one another. In order to create wider stripes of the first adhesive 18, the shims 32b on the second region 30b of the die 30 can be wider than the shims 32a on the first region 30a of the die 30. Additionally, each stripe can be varied independently by the choice of shims. In general, the 25 adhesive properties of the striped construction will be proportional to the ratio of the total areas of the adhesives. The area of each adhesive depends on the width of the stripe, as the length of each stripe will generally be about the same in a given label or other end product. Thus, increasing the width of the first adhesive will increase its proportional area and the proportional effect of its adhesive properties. The adhesive properties of the final striped construction depend in part on the widths of the stripes, which depend on the widths of the shims 32a and 32b.

Overlapping shims, such as those shown in FIG. 2, can also be used to create gaps 13 between the stripes of adhesive, as shown in FIG. 7. The overlapping regions of the shims block the flow of both adhesives, creating the gaps or channels 13 containing no adhesive. The size of the gaps can be controlled by the size and placement of the shims 32a and 32b. The gaps can be air channels that allow air to escape when the adhesive construction is applied to a substrate, thereby facilitating the easy adherence of the construction to the substrate.

Shims 32a, 32b can be made of any suitable material sufficiently rigid to block the flow of adhesive through the die opening at the location of the shims. In one embodiment, the shims 32a, 32b are plastic and are adhered directly to the center die 40 by, e.g., a suitable adhesive. If desired, the shims 32a, 32b can be constructed of the same material as the die itself, or of the same material as the lips of the die. One nonlimiting example of a suitable material for the shims is metal. Another example is a rigid polymer having thermal stability at the temperature(s) at which the adhesives are die coated. In one embodiment, each set of shims 32a, 32b is integrated together into a single uniform piece that is positioned on the center die 40. In another embodiment, the shims and flow passages are machined into the center die 40 so that they are integrated as part of the die itself.

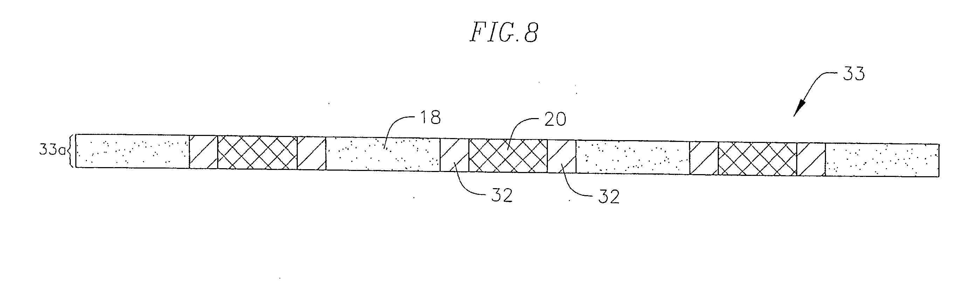

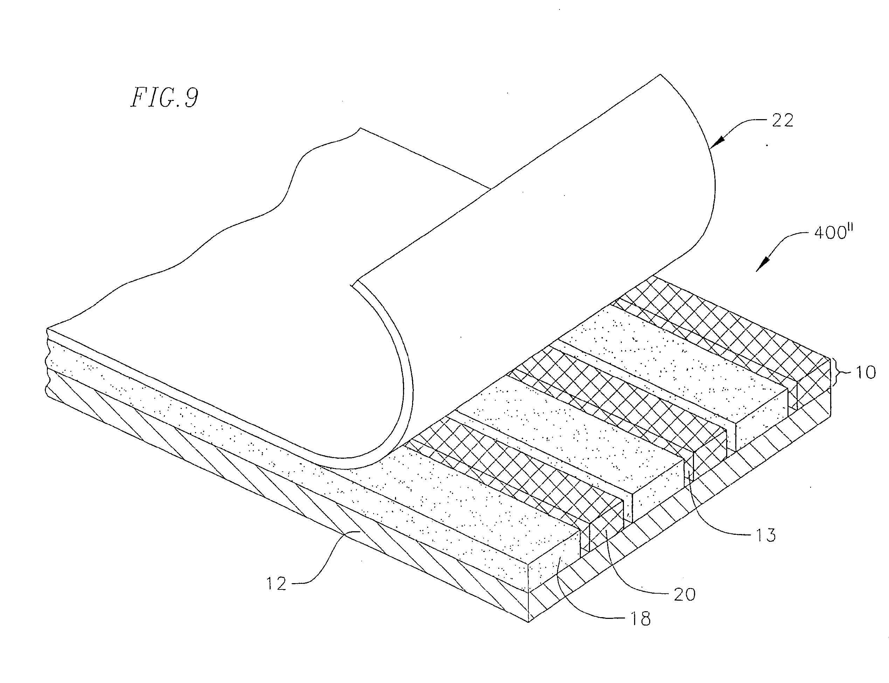

In another embodiment, shown in FIG. 8, a single layer die 33 containing only a single portion 33a, is used to create the striped adhesive construction 400" shown in FIG. 9. The single layer die 33 includes shims 32 positioned to separate the flow of the two adhesives 18 and 20. The first and second adhesives 18 and 20 flow through alternating flow passages between the shims 32 onto the release liner 22. The shims 32 block the flow of both adhesives, creating the gaps 13 in the resulting adhesive coating 10. In the embodiment shown, the stripes of the first adhesive 18 are wider than the stripes of the second adhesive 20.

The single layer die 33 has only the one portion 33a for delivering the alternating stripes of adhesive. As a result, the single layer die 33 has multiple, separate adhesive inlets, one for each stripe, so that the two adhesives remain separated from each other. This design is more complicated than the dual layer die, which does not require a separate adhesive inlet for each separate stripe. In the dual layer die, one adhesive inlet is used to introduce the first adhesive into the first slot, and a second adhesive inlet is used to introduce the second adhesive into the second slot.

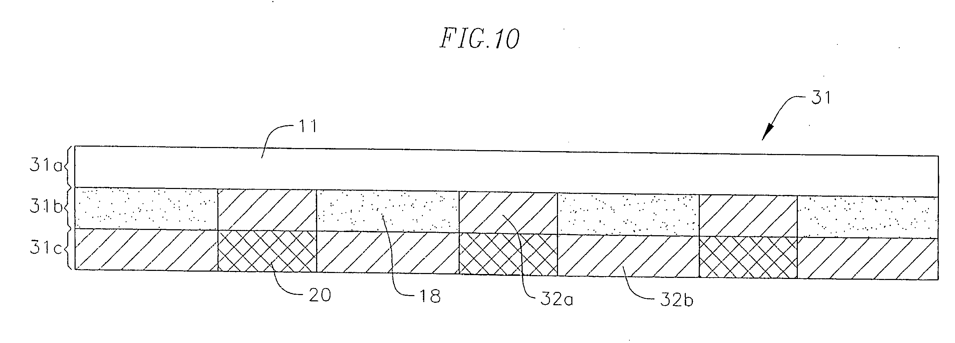

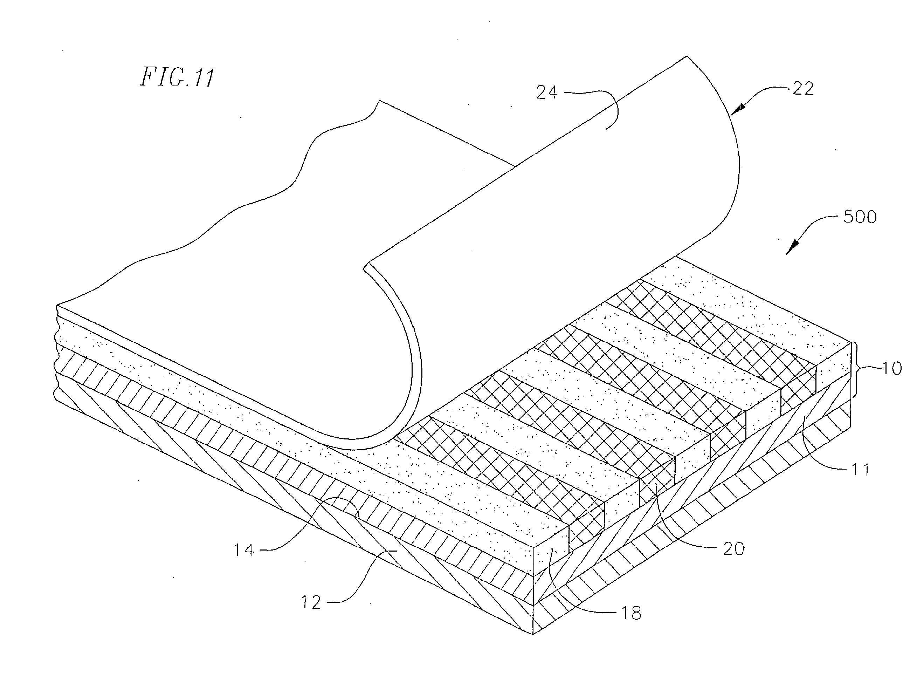

In another embodiment, a tri-Iayer die 31, shown in FIG. 10, is used to create a striped adhesive construction 500, shown in FIG. 11. A base coat 11 is die coated through a first region 31a of the die 31. A first adhesive 18 is die coated through a second region 31 b of the die 31, and a second adhesive 20 is die coated through a third region 31 c of the die 31. In this configuration, the second and third regions 31b and 31c, respectively, of the die 31 include shims 32a and 32b respectively, for creating the desired striped construction. The shims 32a on the second region 31b of the die 31 and the shims 32b on the third region 31c of the die 31 are offset from each other such that the stripes of second adhesive 20 are coated between the stripes of first adhesive 18. In order to create wider stripes of the first adhesive 18, the shims 32b on the third region 31c of the die 31 are wider than the shims 32a on the second region 31 b of the die 31.

The resulting striped adhesive coating 10 created with the tri-layer die 31 is show in FIG. 11. The striped adhesive coating 10 includes a base layer 11 and first and second adhesives 18 and 20 in alternating continuous stripes. Adhering the base coat 11 to a facestock 12 can prevent migration of constituents from the adhesive coating 10 into the facestock 12 and/or can improve 25 facestock adhesion. Each of the stripes of the adhesives 18 and 20 can optionally be spaced apart from each other, leaving air channels 13 (shown in FIG. 7).

In another embodiment, the tri-layer die 31 is used to coat an adhesive coating with alternating stripes of three different adhesives. A first adhesive is coated through the first region 31 a, a second adhesive is coated through the second region 31 b, and a third adhesive is coated through the third region 31c. Shims are positioned to block the adhesives to form alternating stripes of desired widths.

Higher order dies (e.g., four-layer, five-layer, etc.) also can be used to coat combinations of adhesives and base coats onto a moving web. After coating or otherwise applying the various adhesives to the release liner or facestock, the adhesive construction can then be cut, such as by die-cutting or butt-cutting, to form unprinted labels on a release liner. The label sheet may also be matrix-stripped, as is known in the art.

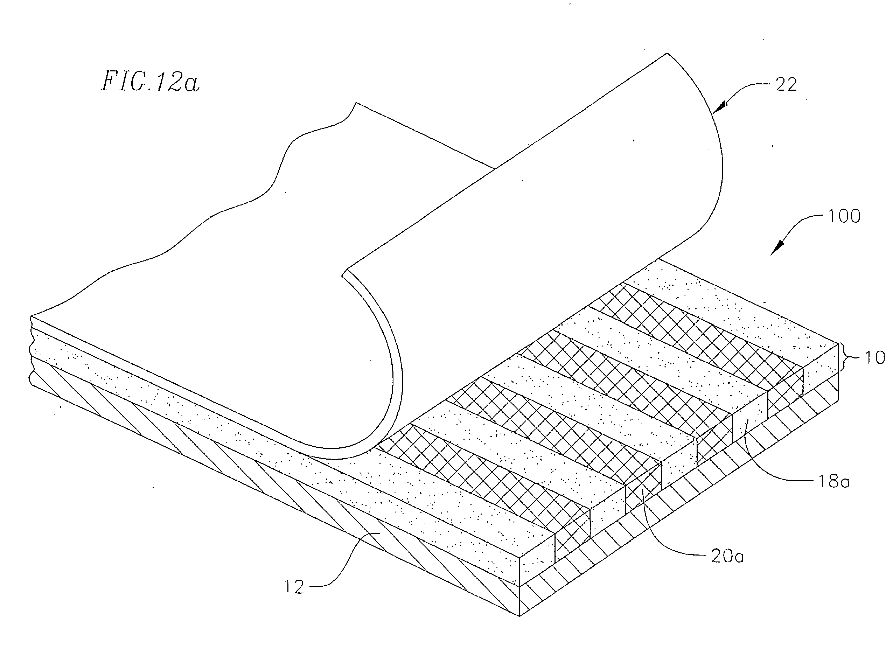

A variety of striped adhesive constructions according to the invention can be made using a single, dual, tri-layer, or higher order die to die coat different combinations of adhesives. In one embodiment, shown in FIG. 12a, a PSA construction 100 exhibits controlled adhesion and is, at least initially, repositionable. As shown in FIG. 12a, the PSA construction 100 comprises a striped adhesive coating 10 adhered to a release liner 22 and facestock 12. The adhesive coating 10 comprises a layer of removable adhesive 18a and a layer of permanent adhesive 20a. The layer of removable adhesive 18a comprises a plurality of stripes coated on the facestock 12. The layer of permanent adhesive 20a comprises a plurality of stripes coated next to the layer of removable adhesive 18a. Optionally, the adhesive coating 10 also includes a base coat 11 (e.g., FIG. 11), and/or gaps 13 (e.g., FIG. 7). The adhesive layer or coating 10 is initially repositionable after being applied to a paper, film, polyolefin, steel, or glass substrate, and is adapted to form a permanent bond to the substrate within about 20 minutes.

A nonlimiting example of a removable adhesive is "R-175," made by Avery Dennison Performance Polymers (Mill Hall, PA). It is an acrylic PSA comprised of the monomers: poly 2-ethylhexyl acrylate, butyl acrylate, and carboxyl (methyl methacrylic acid). A nonlimiting example of a permanent adhesive is "S-490," also made by Avery Dennison. It is an acrylic copolymer PSA that generally corresponds to the invention described in U.S. Patent No. 5,164,444.

The combined coat weight of the removable adhesive 18a and the permanent adhesive 20a is preferably less than about 26 g/m (gsm or grams per square meter), more preferably from about 8 to 26 g/m , still more preferably from about 16 to 20 g/m , and even more preferably from about 17 to 19 g/m (on a dry weight basis).

The adhesive layers of the present invention can be coated onto the facestock or release liner by any means known to those of skill in the art. For example, adhesive layers 18a and 20a can be applied by solvent coating or emulsion coating at one or more coating stations. Alternatively, adhesive layers 18a and 20a can be coated to different webs, and then laminated together to form an integral product. The layers of the adhesive coating 10 can be simultaneously applied by die coating, as described above.

The adhesive coating of the present invention is repositionable for a period of time after application to a substrate and then builds into a permanent bond. The adhesive remains repositionable for about 2 minutes after application. Thereafter, the adhesive begins to form a permanent bond to the substrate. This permanent bond generally develops within about 20 minutes. This time delay makes the adhesive construction particularly suitable for use as an address label. If the adhesives are skin-friendly (i.e., non-toxic and non-irritating), the constructions are also useful as medical adhesives, and should allow a user to peel them away from the skin with little discomfort. The adhesive constructions also exhibit directional properties; that is, they can be more easily removed from a substrate by peeling in a machine or down-web direction than in the crossdirection.

The repositionability of the adhesive coating 10 can be varied by adjusting the width and thickness (coat weight) of the adhesives 18a and 20a. For example, a tri-layer die 31 as shown in FIG. 10 can be used to die coat thin layers of both adhesives 18a and 20a covered by a thicker continuous layer of permanent adhesive 20a, as a base coat 11. To increase the repositionability, the width of the stripes of the removable adhesive 18a can be increased to increase the coverage area of the removable adhesive 18a. The resulting construction has an adhesive surface covered with a thin layer of removable adhesive 18a, allowing the label to be repositionable for a longer period of time. With time, the bonding of the permanent adhesive 20a increases. The larger the volume of the permanent adhesive 20a, the higher the ultimate peel adhesion. Including a base coat 11 of permanent adhesive 20a may provide a sufficiently strong permanent bond while allowing the stripes of removable adhesive 18a to be widened to improve repositionability. The width of the stripes and/or the thickness of the base coat / adhesive layer can be adjusted to obtain the desired adhesive properties.

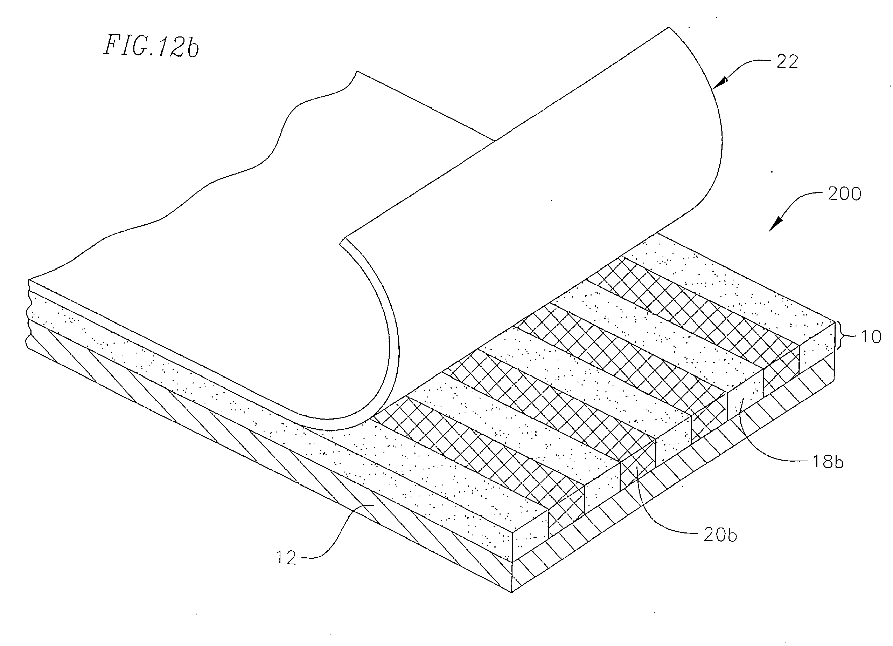

In another embodiment, a PSA construction 200, shown in FIG. 12b, exhibits desirable adhesion at both low and high temperatures. A low temperature adhesive 18b is coated in alternating stripes with a high temperature adhesive 20b. The low temperature adhesive 18b provides good adhesion at low application temperatures but does not provide high peel adhesion to substrates at normal room temperatures, and can exhibit too much tack at high temperatures. Low temperature PSAs can exhibit relatively poor convertibility, causing residue to build up in the cutting dies used to cut sheet and label constructions. The high temperature adhesive 20b adheres well at high application temperatures, but can exhibit undesirable properties at low temperatures, such as too little tack. Optionally, the adhesive coating 10 can also include a base coat 11 (e.g., FIG. 11), and/or gaps 13 (e.g., FIG. 7).

A nonlimiting example of a low temperature adhesive 18b is "S-2075," made by Avery Dennison Corporation. It is a freezer-grade adhesive with a very low Tg. Other nonlimiting 25 examples of adhesives that adhere well at low temperatures include silicone PSA, tackified acrylic adhesive, or low Tg adhesive. A nonlimiting example of a high temperature adhesive 20b is "S-2045," made by Avery Dennison Corporation. It is a permanent adhesive with a higher Tg. The S-2075 and S-2045 adhesives are generally described in U.S. Patent No. 5,290,842. Other nonlimiting examples of adhesives that adhere well at high temperatures include silicone adhesives and untackified acrylic adhesives.

The striped combination of these high and low temperature adhesives can create an adhesive construction that adheres well at low application temperatures and that has high peel adhesion at room temperature and good convertibility. The striped construction has a wide range of tack, peel, and shear properties. By changing the thicknesses of the two adhesives 18b and 20b, or the ratio of the two thicknesses, or the widths of the adhesives, the adhesive properties of the striped construction can be varied or adjusted according to the desired application. For example, to increase peel adhesion at room temperatures, the thickness and/or width of the stripes of the high temperature adhesive 20b can be increased; alternatively, or in addition, the thickness and/or width of the stripes of the low temperature adhesive 18b can be decreased. An optional base coat 11 (shown in FIG. 11) may also be used with this adhesive construction.

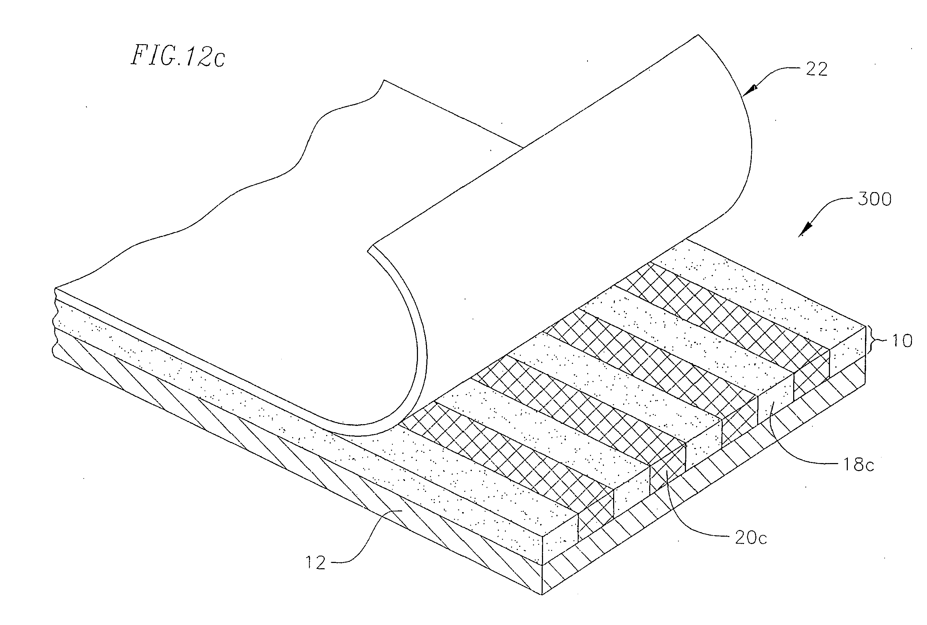

In yet another embodiment of the invention, a PSA construction 300, shown in FIG. 12c, exhibits desirable adhesion to both high surface energy substrates and low surface energy substrates. A low surface energy adhesive 18c is coated in alternating stripes with a high surface energy adhesive 20c. The low surface-energy adhesive 18c adheres well to substrates with low surface energy, such as polyolefins. The high surface-energy adhesive 20c adheres well to substrates with high surface energy, such as steel and glass. The PSA construction 300 including the combination of both adhesives adheres well to many different types of surfaces. Optionally, the adhesive coating 10 can also include a base coat 11 (e.g., FIG. 11), and/or gaps 13 (e.g., FIG. 7).

A nonlimiting example of a high surface-energy adhesive 20c is "S-690," an acrylic PSA made by Avery Dennison Corporation and described in U.S. Patent No. 4,812,541. Other nonlimiting examples of high surface-energy adhesives include rubberbased adhesives such as styrene-butadiene rubber latex adhesive, and acrylic adhesives such as S-490 or S-690. A nonlimiting example of a low surface-energy adhesive 18c is "tackified S-690," made by Avery Dennison Corporation.

In one embodiment, the adhesive construction 300 includes alternating stripes of acrylic adhesive and styrene-butadiene rubber latex adhesive. Other nonlimiting examples include silicone / acrylic stripes, silicone / styrene-butadiene rubber latex adhesive stripes, and silicone / rubberbased stripes.

Another benefit of this striped PSA construction 300 is the ability to control the cost of the adhesive. Adhesives that adhere well to low surface energy substrates, such as silicone PSAs, can be relatively expensive. Adhesives that adhere well to high surface energy substrates may have lower costs, but they may also have undesirable properties such as low durability, low tack, etc. By stripe coating a lower cost adhesive with a higher cost adhesive, the total cost can be controlled without sacrificing the adhesive properties of the construction. Another way to reduce the cost of the adhesive construction is to use filled adhesives. Filled adhesives include inert filler materials such as calcium carbonate which dilute the adhesive and thereby reduce the cost of the adhesive. Filled adhesives can be used in alternating stripes with non-filled adhesives to reduce cost without losing all of the desirable properties of non-filled adhesives.

Although the adhesive pairs 18a and 20a, 18b and 20b, and 18c and 20c have been described as a removable adhesive and a permanent adhesive, a low-temperature adhesive and high-temperature adhesive, and a high surface energy adhesive and low surface energy adhesive, respectively, it is understood that any combination of adhesives can be used in order to produce desired adhesive properties. For-example, a combination of two adhesives having different properties can be particularly useful in name tag labels, used, e.g., to identify people at social and business functions. Because some adhesives adhere well to certain fabrics and not to others, providing a combination of adhesives yields a name tag that adheres well to different fabrics.

Nonlimiting examples of adhesive combinations include: permanent/removable, permanent/filled adhesive, permanent/structural, less ooze/aggressive, expensivelless expensive, cross linked/uncross linked, low temperaturelhigh temperature, low temperature/room temperature, high temperature/room temperature, rubber/acrylic, rubber/silicone, acrylic/silicone, plasticizerresistant/plasticizer-permeable, permanentlheat-activatable, and hot melt/emulsion.

As the preceding description indicates, the invention also provides a method for simultaneously coating two or more stripes of PSAs onto a moving web. A single, dual, tri-layer, or higher order is used with shims or other suitable barriers, positioned to align the PSA stripes, as described above. This method produces a striped PSA construction where one adhesive is in one lane and a second adhesive is in another lane. Alternatively, three or more adhesives are formed in additional lanes, and/or one lane is left empty, without adhesive. The adhesives are simultaneously applied to the moving web in a single coating step.

This method combines the desirable adhesive properties of different adhesives by forming them into alternating stripes instead of mixing them together into a single blended adhesive. The resulting adhesive properties of the striped adhesive can offer advantages over a blended adhesive. Blending can lead to the loss of the unique adhesive properties of each individual adhesive, whereas the use of alternating stripes can reduce or prevent that loss. In general, each alternating stripe is provided as a continuous strip or zone of one adhesive. (In some embodiments, however, continuity may be interrupted periodically.) The width of the stripes is varied to adjust the desired characteristics of the striped construction. The limit of the properties of the striped adhesive approaches those of a blended adhesive as the width of the stripes decreases, and approaches those of a single adhesive as the width of the stripes increases.

In one embodiment, the method includes providing a moving web, which is a facestock or a release liner. The adhesive is precisely applied to the web by die coating the adhesive through a single, dual, or tri-layer die with the desired arrangement of shims, as described in more detail above. After the adhesive is coated onto the moving web, the coated construction is then laminated to the other of the facestock or release liner. The release liner may include a release coating to facilitate clean and easy removal of the adhesive. This release coating may be cured to ensure a consistent finish and long-term stability.

### Examples and Testing Methods

The following non-limiting Examples illustrate various embodiments of the invention. Examples 1-4 illustrate a striped adhesive construction having permanent and removable adhesives. Example 5 illustrates a striped adhesive construction having high and low temperature adhesives. Example 6 illustrates a striped adhesive construction having high and low surface-energy adhesives. In each case, adhesive coat weights are presented as grams per square meter ("gsm"). The adhesives were constructed using a dual-die coater.

For Examples 1-4, all peel testing was performed at 1600 angle. Multiple samples were applied to envelope substrates at various (specified) application pressures. For each application pressure, three samples were tested at each application pressure and the average and peak debonding forces (in Newtons) were reported after specified dwell times, as shown in the corresponding Tables. Adhesive and facestock failures, and their modes, were also reported after specified dwell times. If all three samples were cleanly removed at the designated dwell time, the failure was reported as 1.0. If one sample was removed with a tear in the facestock, but the remaining samples were cleanly removed, the failure was reported as 1.3. If two samples were removed with a tear in the facestock, but the third sample was cleanly removed, the failure was reported as 1.6. Finally, if all three samples were removed with a tear in the facestock, the failure was reported as 2.0. Debonding forces were measured in Newtons per inch and were obtained using commercially available tensile testing equipment such as available from Instron (Norwood, MA). The following testing procedures were used for the peel adhesion tests:

Peel Adhesion. The adhesive was coated at an approximate coat weight of 25 g/m2 (1.0 mil) onto a silicone coated release liner and then laminated to a paper facestock, forming a laminate construction. The resulting construction was die-cut into 25x204 mm (1x8 in) sized strips. The strips were then applied centered along the lengthwise direction to 50x152 mm (2x6 in) brightly annealed, highly polished stainless steel test panels and rolled down using a 2 kg (4.5 lb.), 5.45 pli 65 shore "A" rubber-faced roller, rolling back and forth once, at a rate of 30 cm/min (12 in/min). The samples were conditioned for either 15 minutes or 24 hours in a controlled environment testing room maintained at 21 ° C (70° F) and 50% relative humidity. After conditioning, the test strips were peeled away from the test panel in an Instron Universal Tester according to a modified version of the standard tape method Pressure-Sensitive Tape Council, PSTC-1 (rev. 1992), Peel Adhesion for Single Coated Tapes 180° Angle, where the peel angle was either 180° or 90°, i.e., perpendicular to the surface of the panel, (unless otherwise specified) at a rate of 30 cm/min (12 15 in/min). The force to remove the adhesive test strip from the test panel was measured in Newtons/inch. Glass panels and high density polyethylene panels were also used to measure peel adhesion. All tests were conducted in triplicate.

### Example 1

An adhesive construction was made by applying a base coat of 10 g/m of permanent adhesive to a facestock, and 7 g/m each of a removable adhesive and a permanent adhesive coated on top of the base coat. (The base coat can be provided first, followed by the removable/permanent adhesive pair, or the adhesives can be coated simultaneously using a dual die or multiple die coater.) The permanent adhesive layer was coated to a width of 2/16" and the removable adhesive layer was coated to a width of 3/16". The permanent adhesive was S-490, and the removable 25 adhesive was R-175, described previously.

The completed construction was applied to a Columbian envelope substrate at varying application pressures, as shown in Table 1. The labels were then removed from the envelope after specified dwell times. The labels were removed from the envelope at a pull direction of 1600 angle and at a rate of 36 "/min. Table 1 summarizes the results of debonding force testing.

**Table 1**

| Application Pressure | Finger pressure | 290g | 500g | 1000g |
|---|---|---|---|---|
| Average Debonding Force After 2 minutes | 2.4 | 2.6 | 2.7 | 2.9 |
| Peak Debonding Force After 2 minutes | 4.9 | 5.1 | 5.3 | 5.5 |
| Average Debonding Force After 20 minutes | 2.6 | 2.8 | 2.9 | 3.3 |
| Peak Debonding Force After 20 minutes | 5.4 | 6.1 | 5.9 | 6.3 |
| Average Debonding Force After 1 hour | 3.6 | 3.1 | 3.2 | 3.7 |
| Peak Debonding Force After 1 hour | 7.3 | 6.3 | 6.8 | 6.4 |
| Average Debonding Force After 2 hours | 3.3 | 3.4 | 3.9 | 4.2 |
| Peak Debonding Force After 2 hours | 7 | 7.1 | 6.8 | 7.3 |
| Average Debonding Force After 4 hours | 4 | 3.4 | 4.2 | 3.8 |
| Peak Debonding Force After 4 hours | 7 | 6.2 | 6.9 | 7.2 |

The results summarized above show that both the average and peak debonding forces increased over time for the four application pressures tested. These results show that while the striped adhesive construction was initially repositionable, the permanent bond between the adhesive construction and the substrate grew with time.

### Example 2

An adhesive construction was made by first applying a base coat of 10 g/m of permanent adhesive to a facestock. Then, 10 g/m of removable adhesive and 10 g/m of permanent adhesive were coated on top of the base coat. The permanent adhesive layer was coated to a width of 2/16", and the removable adhesive layer was coated to a width of 3/16". The permanent adhesive was S-490, and the removable adhesive was R-175, described previously.

The completed construction was applied to a Columbian envelope substrate at various application pressures, as shown in Table 2. The labels were then removed from the envelope at dwell times of 2 minutes and 20 minutes. The labels were removed from the envelope at a rate of 36"/min. An emulsion permanent PSA control was also tested, at the same application pressures as the test samples. Table 2 summarizes the results of debonding force and failure testing.

**Table 2**

| | Example 2 | | | | Control |
|---|---|---|---|---|---|
| Application Pressure | Finger pressure | 290 g | 500 g | 1000 g | Emulsion Permanent PSA Control |
| Average Debonding Force after 2 minutes | 3.7 | 3.2 | 3.8 | 4.3 | 5.1 |
| Peak Debonding Force after 2 minutes | 7.8 | | 7.6 | 8.5 | |
| Average Debonding Force after 20 minutes | 3.8 | 4.4 | 4.7 | 4.6 | |
| Peak Debonding Force after 20 minutes | 8.2 | | 8.6 | 8.6 | |
| Failure after 2 minutes | 1.3 | 1.0 | 1.6 | 2.0 | 2.0 |
| Failure after 20 minutes | 1.6 | 2.0 | 2.0 | 2.0 | 2.0 |

These results show that initially, the striped adhesive construction exhibited a lower debonding force than the control. However, over time, the debonding force for the striped adhesive construction increased past the initial debonding force of the control. Thus, the striped adhesive construction exhibited greater repositionability than the control in the first two minutes, while still developing a strong bond with the substrate over time.

The directional properties of this adhesive construction were tested by first applying the construction to a substrate, or "web," and then peeling the construction away from the web in either the down-web or cross-web direction, at a rate of 12 inches per minute, after specified dwell times. The debonding force was measured at each dwell time. Table 2A summarizes the results for peeling in the down-web direction, and Table 2B summarizes the results for peeling in the crossweb direction.

**Table 2A - Debonding Force of Construction Peeled in the Down-Web Direction**

| Dwell Time | Debonding Force (N/in) | Failure Mode |
|---|---|---|
| 30 seconds | 2.6 | Slight adhesive pick |
| 5 minutes | 2.9 | Slight fiber pick, slight adhesive pick |
| 20 minutes | 3.3 | Slight fiber pick |

**Table 2B - Debonding Force of Constructions Peeled in the Cross-Web Direction**

| Dwell Time | Average Debonding Force (N/in) | Peak Debonding Force (N/in) | Low Debonding Force (N/in) | Failure Mode |
|---|---|---|---|---|
| 30 seconds | 2.5 | 3.2 | 1.6 | Panel, very slight adhesive pick |
| 5 minutes | 2.7 | 3.7 | 1.6 | Panel, slight fiber pick |
| 20 minutes | 2.7 | 3.4 | 1.8 | Face tear: 30% area and 80% length |

The data presented in Tables 2A and 2B show that the adhesive constructions according to the indicated embodiments did not develop permanent adhesion in the down web direction after 20 minutes dwell time, but did develop permanent adhesion in the cross web direction after 20 minutes dwell time. The adhesive stripes, of course, run along the length of the web.

### Example 3

An adhesive construction was prepared according to Example 2 and applied to a Staples® brand envelope at various application pressures, as shown in Table 3. The labels were then removed from the envelope after dwell times of 2 minutes and 20 minutes, respectively. The labels were removed from the envelope at a rate of 36"/min. An emulsion permanent PSA control was also tested, at the same application pressures as the test samples. Table 3 summarizes the results of debonding force and failure testing.

**Table 3**

| | Example 3 | | | | Control |
|---|---|---|---|---|---|
| Application Pressure | Finger | 290 g | 500 g | 1000 g | Permanent PSA Control |
| Average Debonding Force after 2 minutes | 3.3 | 3.2 | 3.4 | 4.0 | 5.3 |
| Peak Debonding Force after 2 minutes | 7.6 | 7.3 | 7.4 | 8.1 | |
| Average Debonding Force after 20 minutes | 3.7 | 3.4 | 3.9 | 4.3 | |
| Peak Debonding Force after 20 minutes | 8.0 | 7.5 | 7.8 | 7.7 | |
| Failure after 2 minutes | 1.0 | 1.3 | 1.3 | 2.0 | 2.0 |
| Failure after 20 minutes | 1.3 | 2.0 | 1.6 | 2.0 | 2.0 |

Similar to Example 2, these results show that initially, the striped adhesive construction exhibited a lower debonding force than the control. Over time, the debonding force for the striped adhesive construction increased past the initial debonding force of the control. Thus, the striped adhesive construction exhibited greater repositionability than the control in the first two minutes, while still developing a strong bond with the substrate over time.

### Example 4

An adhesive construction was prepared according to Example 2 and applied to a Globe-Weis® brand envelope at various application pressures, as shown in Table 4. The labels were then removed from the envelope after dwell times of 2 minutes and 20 minutes, respectively. The labels were removed from the envelope at a rate of 36"/min. An emulsion permanent PSA control was also tested. Table 4A summarizes the results of debonding force and failure testing.

**Table 4A**

| | Example 3 | | | | Control |
|---|---|---|---|---|---|
| Application Pressure | Finger Pressure | 290 g | 500 g | 1000 g | Emulsion Permanent PSA Control |
| Average Debonding Force after 2 minutes | 2.9 | 2.8 | 3.1 | 3.5 | 4.7 |
| Peak Debonding Force after 2 minutes | 7.3 | 6.8 | 7.1 | 7.3 | |
| Average Debonding Force after 20 minutes | 3.7 | 3.2 | 4.3 | | |
| Peak Debonding Force after 20 minutes | 8.6 | 7.5 | 7.9 | | |
| Failure after 2 minutes | 1.0 | 1.3 | 1.3 | 1.6 | 2.0 |
| Failure after 20 minutes | 1.6 | 1.6 | 2.0 | 2.0 | 2.0 |

Similar to the above Examples, these results show that the striped adhesive construction initially exhibited a lower debonding force than the control. Over time, the debonding force for the striped adhesive construction increased past the initial debonding force of the control. Thus, the striped adhesive construction exhibited greater repositionability than the control in the first two minutes, while still developing a strong bond with the substrate over time.

Failure testing was conducted on the construction of Example 2 after various dwell times. The results are summarized in Table 4B.

**Table 4B**

| | Example 4 | | Control | |
|---|---|---|---|---|
| Application Pressure | Finger Pressure | 290 g | 500 g | 1000g |
| Failure after 2 minutes | 1.0 | 1.0 | 1.0 | 1.3 |
| Failure after 20 minutes | 1.0 | 1.0 | 1.3 | 1.6 |
| Failure after 1 hour | 1.3 | 1.3 | 1.3 | 2.0 |
| Failure after 2 hours | 1.6 | 1.6 | 2.0 | 2.0 |
| Failure after 4 hours | 1.6 | 1.6 | 2.0 | 2.0 |

These results also confirm the initial repositionability of the striped adhesive, followed by the development of a permanent bond with the substrate.

### Example 5

Three different adhesive constructions having high and/or low temperature adhesives were subjected to a 90° Peel Adhesion test to measure adhesive performance. The high temperature adhesive was "S-690," an acrylic adhesive made by Avery Dennison Corporation. The low temperature adhesive was "DC 7735," made by Dow Coming. The substrate was PPG Paint 10 Panel, purchased from ACT Test Panels, Inc. (Hillsdale, MI).

The high temperature and low temperature adhesives were each tested, followed by testing of a striped adhesive construction consisting of alternating stripes of the high and low temperature adhesives. The stripes were equal in width, each having a width of 3/8 inches.

**Table 5**

| 90° Peel Adhesion | 0°C (Low Temperature) | 23°C (Room Temperature) |
|---|---|---|
| Acrylic Adhesive (S-690) ($2.50/msi) | 1.2 N/in | 11.2 N/in |
| Low Temperature Adhesive (DC 7735) ($7.00/msi) | 7.2 N/in | 10.1 N/in |
| Acrylic/Low Temperature Adhesive Strips | 4.3 N/in | 9.8 N/in |

These results show that the striped adhesive performed almost as well as either adhesive at room temperature, and out-performed the acrylic adhesive at low temperature. The striped adhesive provided improved adhesive performance at low temperature without sacrificing adhesive performance at higher temperatures. By including stripes of the less expensive acrylic adhesive, the overall cost of the striped adhesive construction can be reduced while still obtaining good performance.

### Example 6

Three adhesive constructions of high and low surface-energy adhesives were subjected to a 1800 Peel Adhesion test from a painted substrate at 00 C. The high surface-energy adhesive was "S-690," an acrylic adhesive made by A very Dennison Corporation. The low surface-energy adhesive was "Tackified S-690," made Avery Dennison Corporation. The striped adhesive construction included alternating stripes of the high surface-energy adhesive and the low surfaceenergy adhesive. The stripes were equal in width, each stripe having a width of 3/8 inches.

The following procedure was used for the testing in this example. The 1800 Peel Adhesion test was performed at 00 C on a painted substrate. A strip of 2 mil thick PET film, 12.7 mm x 150 mm, was positioned on one adhesive face of the adhesive construction. Pressure was applied to the aluminum by rolling with a 2 kg roller. The opposite face of the sample was then firmly bonded to a rigid painted substrate. The painted substrate was a freshly painted steel panel with PPG clear coat I base coat paint. The panel was 100 mm x 300 mm. After dwelling on the substrate for 15 minutes at room temperature, the sample was conditioned at 0 °C for 15 minutes. The sample was then removed by pulling the PET film strip at 1800 to the adhesive surface at a speed of 30.5 cm/minute, noting the average adhesion in N/in width. The results are summarized in Table 6.

**Table 6**

| 180° Peel Adhesion | Low Surface Energy (PP) | High Surface Energy (SS) |
|---|---|---|
| Acrylic Adhesive (S-690) ($2.50/msi) | 1.0 N/in | 15.7 N/in |
| Tackified Acrylic (LSE Adhesive) (Tackified S-690) ($2.75/msi) | 23.5 N/in | 19.1 N/in |
| Acrylic / Tackified Acrylic Adhesive Strips | 17.8 N/in | 17.7 N/in |

Table 6 shows that the striped adhesive performed well on both the high surface energy and the low surface energy substrates. Thus, the striped adhesive obtained good results while utilizing a less expensive acrylic adhesive.

The invention has been described and illustrated by exemplary and preferred embodiments, but is not limited thereto. Persons skilled in the art will appreciate that a variety of modifications can be made without departing from the scope of the invention, which is limited only by the claims.

## Claims

1. A pressure-sensitive adhesive construction, comprising:
a facestock;
a release liner; and
an adhesive layer between the release liner and the facestock, the adhesive layer comprising a plurality of die coated, alternating stripes of first and second adhesives.

2. The pressure sensitive adhesive construction of claim 1, wherein the first adhesive is a permanent adhesive and the second adhesive is a removable adhesive, and further wherein the adhesive layer is initially repositionable after being applied to a paper, film, polyolefin, steel, or glass substrate, and is adapted to form a permanent bond to the substrate within about 20 minutes.

3. The pressure-sensitive adhesive construction of claim 1 or 2, wherein the adhesive layer further comprises a base coat disposed between the facestock and the plurality of stripes of the first and second adhesives.

4. The pressure-sensitive adhesive construction of claim 3, wherein the base coat comprises a permanent adhesive.

5. The pressure-sensitive adhesive construction of any one of claims 1 to 4, wherein the plurality of stripes of the first and second adhesives are spaced apart from each other by a plurality of gaps.

6. The pressure-sensitive adhesive construction of any one of claims 1 to 5, wherein the stripes of the first and second adhesive are spaced apart to form alternating stripes where no adhesive is present.

7. The pressure-sensitive adhesive construction of any one of claims 1 to 6, wherein the adhesive layer further comprises alternating stripes of a third adhesive.

8. The pressure-sensitive adhesive construction of any one of claims 1 to 7, wherein the first adhesive is a high-temperature adhesive and the second adhesive is a low-temperature adhesive.

9. The pressure-sensitive adhesive construction of claim 8, wherein the first adhesive is selected from the group consisting of silicone adhesives and untackified acrylic adhesives, and the second adhesive is selected from the group consisting of silicone adhesives, tackified acrylic adhesives, or low Tg adhesives.

10. The pressure-sensitive adhesive construction of any one of claims 1 to 9, wherein the first adhesive is a high surface energy adhesive and the second adhesive is a low surface energy adhesive.

11. The pressure-sensitive adhesive construction of claim 10, wherein the first adhesive is selected from the group consisting of styrene-butadiene rubber latex adhesives and acrylic adhesives, and the second adhesive is selected from the group consisting of acrylic adhesives and silicone adhesives.

12. A method of preparing a pressure-sensitive adhesive construction comprising:
providing a coating die having a first slot and a second slot and a plurality of shims positioned in at least one of the first slot and the second slot;
moving a web past the coating die, wherein the web comprises one of .a facestock and a release liner;
die coating an adhesive layer onto the web in a single pass, the adhesive layer comprising a plurality of alternating stripes of a first adhesive and a second adhesive, wherein the first adhesive is die coated through the first slot and the second adhesive is die coated through the second slot; and laminating the other of the facestock and the release liner to the adhesive layer opposite the web.

13. The method of claim 12, further comprising die coating a base coat onto the adhesive layer simultaneously with the single pass.

14. The method of claim 13, wherein the base coat comprises a permanent adhesive.

15. The method of claim of any one of claims 12 to 14, wherein the plurality of shims are positioned in the first slot and the second slot in an alternating pattern.

16. The method of any one of claims 12 to 15, wherein the plurality of shims comprises a plurality of first shims positioned in the first slot to block the first adhesive, and a plurality of second shims positioned in the second slot to block the second adhesive, and wherein the plurality of first shims overlaps the plurality of second shims to form gaps between the alternating stripes of first and second adhesives.

17. The method of claim 16, wherein the coating die further comprises a third slot through which a base coat is simultaneously die coated.
